# EUROPEAN PATENT APPLICATION

(11) **EP 1 839 852 A2**
(43) Date of publication of application: **03.10.2007**
(21) Application number: 07006315.1
(22) Date of filing: 27.03.2007
(51) Int. Cl.: B32B 27/36, F16L 11/04

(54) **Fuel hose**

(30) Priority: 28.03.2006 JP 2006089072
(71) Applicant: TOKAI RUBBER INDUSTRIES, LTD., Komaki-shi, Aichi-ken, 485-8550 (JP)
(72) Inventor: Katayama, Kazutaka, Komaki-shi Aichi-ken, 485-8550 (JP); Kasahara, Kazuhito, Komaki-shi Aichi-ken, 485-8550 (JP)
(74) Representative: Kuhnen & Wacker

(57) **Abstract**

A fuel hose which is less permeable to automotive fuels and excellent in low temperature property, hydrolysis resistance, weather resistance and ozone resistance. The fuel hose comprises an inner layer which contacts a fuel being transported, a fuel-permeation-resistant layer provided on an outer peripheral surface of the inner layer and an outer layer provided on an outer peripheral surface of the fuel-permeation-resistant layer, the inner layer being formed by the following (A), the fuel-permeation-resistant layer being formed by the following (B), and the outer layer being formed by the following (C):
(A) an alloy of elastomer components or a polyester resin softened by copolymerization;
(B) at least one polyester resin of polybutylene naphthalate (PBN) and polybutylene terephthalate (PBT);
(C) a polymer having flexural modulus of 350 to 650MPa obtained by blending at least one selected from the group consisting of polymer particles each having a core-shell structure, ethylene acrylic elastomer (AEM) and a styrene-isobutylene block copolymer into polybutylene terephthalate (PBT).

## Description

### BACKGROUND OF THE INVENTION

### Field of the Invention

The present invention relates to a fuel hose for transportation or the like of a fuel such as gasoline, alcohol-containing gasoline (gasohol), diesel fuel, hydrogen, dimethyl ether, liquefied petroleum gas (LPG) and compressed natural gas (CNG).

### Description of the Art

To cope with more stringent regulations against vapor emission of automotive fuels in recent years, various types of fuel hoses for drastic reduction of the fuel vapor emission have been proposed. As such fuel hoses, fluororesin hoses have been conventionally used, however, material cost is expensive. For this reason, research and development for inexpensive polyester resin hoses have been recently promoted. Examples of such fuel hoses include hoses produced by employing polyester resins, which are less permeable to the fuels, such as polybutylene naphthalate (PBN) and polybutylene terephthalate (PBT). However, a hose having a single layer composed of a polyester resin (PBN or PBT) alone has low flexibility, because the polyester resin is highly rigid. Therefore, it is a common practice to provide a laminated structure including a polyester layer having a reduced thickness and a thermoplastic resin layer.

However, the polyester resins such as PBN and PBT are less adhesive to other types of materials. Therefore, the polyester resin layer and the thermoplastic resin layer are typically laminated by providing an adhesive layer therebetween. This correspondingly complicates the production process. To cope with this, there has been proposed a hose having a laminated structure of a layer of the polyester resin such as PBN or PBT and a layer of a thermoplastic polyester elastomer (TPEE). Since both layers are based on the same polyester series, they can be formed by co-extrusion, and laminated and bonded without the use of an adhesive. As such a hose, there has been proposed a hose having a three-layer structure of a TPEE layer, a polyester resin layer and a TPEE layer, laminated in this order from inside, wherein the TPEE layer for the outer layer is formed by TPEE (for example, HYTREL 5577 available from Toray Du Pont Co., Ltd.) obtained by copolymerization of polytetramethylene glycol (PTMG) mainly to provide flexibility to the entire hose and improve hydrolysis resistance (see, for example, Japanese Unexamined Patent Publication No, 2003-287165).

In the hose proposed in the above Publication, the outer layer is formed by the TPEE copolymerized with PTMG, and thus is superior to the outer layer formed by the conventional TPEE in flexibility, a low temperature property (flexibility at a low temperature) and hydrolysis resistance. However, the outer layer has high permeability. For this reason, when water permeating the outer layer is absorbed by its lower polyester resin layer (PBN or PBT layer), the polyester resin layer goes brittle by hydrolysis. Then, the hose may be broken from the thus brittle point of the polyester resin layer by folding. Further, the hose proposed by the above-mentioned publication tends to be easily affected by ultraviolet radiation or ozone because bonding energy of ether groups contained in PTMG of the outer layer is low. As a result, there are concerns about physical properties, such as weather resistance and ozone resistance.

In view of the foregoing, it is an object of the present invention to provide a fuel hose which is less permeable to automotive fuels and excellent in a low temperature property, flexibility, hydrolysis resistance, weather resistance and ozone resistance.

### SUMMARY OF THE INVENTION

To achieve the aforesaid object, a fuel hose according to a first aspect of the present invention comprises an inner layer which contacts a fuel being transported,afuel-permeation-resistantlayer provided on an outer peripheral surface of the inner layer and an outer layer provided on an outer peripheral surface of the fuel-permeation-resistant layer, the inner layer being formed by the following (A), the fuel-permeation-resistant layer being formed by the following (B), and the outer layer being formed by the following (C):
(A) a polyester resin softened by an alloy of elastomer components or copolymerization;
(B) at least one polyester resin of polybutylene naphthalate (PBN) and polybutylene terephthalate (PHT);
(C) a polymer having flexural modulus of 350 to 650MPa obtained by blending at least one selected from the group consisting of polymer particles each having a core-shell structure, ethylene acrylic elastomer (AEM) and a styrene-isobutylene block copolymer into polybutylene terephthalate (PBT).

The inventors of the present invention have conducted intensive studies on materials for forming an outer layer covered on an outer peripheral surface of a less permeable layer to automotive fuels or a fuel-permeation-resistant layer, such as a PBN layer or a PBT layer. As a result, the inventors have found that when an outer layer is formed by a polymer obtained by blending soft ingredients such as polymer particles each having a core-shell structure, AEM and a styrene-isobutylene block copolymer into PBT, concerns about weather resistance and ozone resistance are solved because PTMG or the like is not contained. Since the soft ingredients impart desired flexibility to the outer layer material, a desired flexibility can be obtained. Further, they found after much experimentation that when a flexural modulus of the polymer is within a specified range, a desired low temperature property can be obtained. They also found that when a material for forming an outer layer is based upon PBT, permeability can be lowered as compared with TPEE-based one, and since the soft ingredients have physical properties excellent in low permeability, hydrolysis of its underlying less-permeable layer can be prohibited. Thus, the present invention has been attained.

According to the present invention, a layer (an inner layer) in contact with an inner peripheral surface of a fuel-permeation-resistant layer (a PBN layer or a PBT layer) is formed by a polyester resin softened by an alloy of elastomer components or copolymerization (a blend (alloy) of an elastomer and a polyester resin or thermoplastic polyester elastomer (TPEE). Since each layer in contact with an inner peripheral surface and an outer peripheral surface of the fuel-permeation-resistant layer is made of polyester material, respectively, as same as that of the fuel-permeation-resistant layer, each interlaminar can be bonded without use of adhesive. A fuel hose having such a structure can enjoy less permeability of a benefit of polyester and solve poor hydrolysis resistance of a demerit of polyester.

A fuel hose according to a second aspect of the present invention comprises an inner layer which contacts a fuel being transported and an outer layer provided on an outer peripheral surface of the inner layer, the inner layer being formed by the following (A) and the outer layer being formed by the following (C):
(A) a polyester resin softened by an alloy of elastomer components or copolymerization;
(C) a polymer having flexural modulus of 350 to 650MPa obtained by blending at least one selected from the group consisting of polymer particles each having a core-shell structure, ethylene acrylic elastomer (AEM) and a styrene-isobutylene block copolymer into polybutylene terephthalate (PBT).

When the fuel-permeation-resistant layer (PBN layer or PBT layer) is deleted from the above-mentioned three-layer structure, the resulting hose is inferior in less permeability as compared with the three-layered hose, but is more flexible than the three-layered hose. Therefore, they found that in the case where performance like built-in flexibility is more important, the hose having the two-layer structure is more advantageous. As same as in the three-layered hose, interlaminar of this hose can be bonded without use of adhesive, and the resulting polyester hose is excellent in hydrolysis resistance and is suitable for practical use.

As mentioned above, the .fuel hose of the present invention includes an inner layer formed by a polyester resin softened by an alloy of elastomer components or copolymerization, a fuel-permeation-resistant layer (a PBN layer or a PBT layer) provided on an outer peripheral surface of the inner layer and an outer layer provided on an outer peripheral surface of the fuel-permeation-resistant layer, in which the outer layer is formed by a polymer having flexural modulus within a specified range obtained by blending soft ingredients, such as polymer particles each having a core-shell structure, AEM and a styrene-isobutylene block copolymer into PBT. For this reason, the fuel hose of the present invention is less permeable to automotive fuels and excellent in a low temperature property, flexibility, hydrolysis resistance, weather resistance and ozone resistance. Further, since the interlaminar adhesion of the fuel hose according to the present invention can be obtained without use of adhesive, and material cost thereof is inexpensive, the hose of the present invention is available at low cost in spite of its high performance, as mentioned above.

Further, the fuel hose of the present invention includes an inner layer formed by a polyester resin softened by an alloy of elastomer components or copolymerization and an outer layer provided on an outer peripheral surface of the inner layer, in which the outer layer is formed by a polymer having flexural modulus within a specified range obtained by blending soft ingredients, such as polymer particles each having a core-shell structure, AEM and a styrene-isobutylene block copolymer into PBT. For this reason, in the case where performance like built-in flexibility is more important, the hose having the two-layer structure is more advantageous. As same as in the three-layered hose, interlaminar of this hose can be bonded without use of adhesive, and the resulting polyester hose is excellent in hydrolysis resistance and is suitable for practical use.

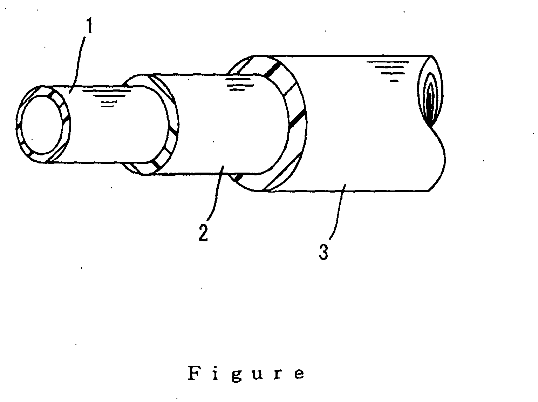

### BRIEF DESCRIPTION OF THE DRAWING

The sole figure of the drawing is a diagram illustrating an exemplary fuel hose according to the present invention.

### DESCRIPTION OF THE PREFERRED EMBODIMENTS

Embodiments of the present invention will hereinafter be described in detail.

A fuel hose according to the present invention includes an inner layer 1 which contacts a fuel being transported, a fuel-permeation-resistant layer 2 provided on an outer peripheral surface of the inner layer 1, and an outer layer 3 provided on an outer peripheral surface of the fuel-permeation-resistant layer 2 as shown in Figure. According to the present invention, the inner layer 1 is composed of a polyester resin softened by an alloy of elastomer components or copolymerization (an alloy of an elastomer and a polyester resin or thermoplastic polyester elastomer (TPEE)) and the fuel-permeation resistant layer 2 is composed of at least one polyester resin of polybutylene naphthalate (PBN) and polybutylene terephthalate (PBT). Further, the outer layer 3 is composed of a specific blend polymer having flexural modulus within a specified range obtained by blending soft ingredients, such as polymer particles each having a core-shell structure, ethylene acrylic elastomer (AEM) and a styrene-isobutylene block copolymer into PBT.

The alloy of an elastomer and a polyester resin, as the material for forming the inner layer 1, is not particularly limited, but examples thereof include softened polyesters obtained by alloying modified polyolefin or a soft ingredient having a core-shell structure (as same as those used for the outer layer 3) with PBT or PBN. These are used either alone or in combination.

The thermoplastic polyester elastomer (TPEE), as the material for forming the inner layer 1, is not particularly limited, but examples thereof include thermoplastic polybutylene-naphthalate elastomer (PBN-based TPE), thermoplastic polybutylene-terephthalate elastomer (PBT-based TPE), PBT-based TPE containing a dimer acid or PTMG as a copolymerizing component, which are used either alone or in combination.

The inner layer 1 may be imparted with electrical conductivity by blending an electrically conductive material such as carbon black, carbon nanotube and metal powder in the material for forming the inner layer so as to release static electricity, generated by a fuel pump, from the hose to outside the hose to prevent ignition of a fuel (such as gasoline) and a like accident which may otherwise occur due to the static electricity.

The fuel-permeation-resistant layer 2 is, as mentioned above, composed of at least one polyester resin of polybutylene naphthalate (PBN) and polybutylene terephthalate (PBT). In other words, PBT or PBN is used alone or in combination of PBT and PBN. The PBT may be prepared, for example, by a DMT method employing dimethyl terephthalate (DMT) and 1,4-butanediol as raw materials or a direct copolymerization method employing terephthalic acid (TPA) and 1,4-butanediol as raw materials. The PBN may be prepared, for example, by an ester exchange method employing 2,6-dimethyl naphthalate (DMN) and 1,4-butanediol as raw materials, or by a direct polymerization method employing 2, 6-naphthalenedicarboxylic acid and 1,4-butanediol as raw materials.

Like the inner layer 1, the fuel-permeation-resistant layer 2 may also be imparted with electrical conductivity by blending an electrically conductive material such as carbon black, carbon nanotube and metal powder in the material for forming the fuel-permeation-resistant layer.

The outer layer 3 formed on an outer peripheral surface of the fuel-permeation-resistant layer 2, as mentioned above, is formed by a blend polymer having flexural modulus within a specified range (350 to 650MPa) obtained by blending soft ingredients such as, polymer particles each having a core-shell structure, AEM and a styrene-isobutylene block copolymer into PBT. The soft ingredients may be used either alone or in combination. The flexural modulus of the blend polymer is measured in accordance with ISO 178.

The blend polymer is an alloy generally having a sea-island structure in which an island phase (domain) composed of the soft ingredient(s) disperses in a sea phase (matrix) composed of PBT, as a base for the blend polymer.

As the PBT used for the blend polymer here, the same materials as those for the fuel-permeation-resistant layer 2 are used.

The polymer particles of the core-shell structure as a soft ingredient of the blend polymer are not particularly limited. For example, the core-shell structure may have a structure including an elastic core of an acrylic elastomer (ACM), a diene elastomer or a silicon elastomer and a shell layer of an acrylic resin or vinyl polymer. Among them, particle polymers having a structure including a core of acrylic elastomer (ACM) and a shell layer of an acrylic resin having a polar functional group are preferred because of excellent compatibility with PBT as a base. The polar functional group for forming the shell layer is not particularly limited, however, acrylic resins having an epoxy group or a carboxylic group are preferred in terms of the above-mentioned compatibility.

Further, ethylene acrylic elastomer (AEM) may be used as a soft ingredient for the blend polymer. Examples of the ethylene acrylic elastomer (AEM) include one prepared by polymerization of ethylene, acrylic ester and a small amount of closslinking monomer. Acrylic elastomer (ACM) may be blended into the AEM, as required. Examples of the acrylic elastomer (ACM) include that prepared by polymerization of ethylene, vinyl acetate, acrylic ester and a small amount of crosslinking monomer. Examples of acrylic ester include butyl acrylate, methyl acrylate, ethyl acrylate, propyl acrylate, hexyl acrylate and 2-ethylhexyl acrylate, which may be used either alone or in combination. Examples of the cross-linking monomer include esters (such as butylene diacrylate, butylene dimethacrylate and trimethylolpropane) of acrylic acid and polyols, vinyl compounds such as divinylbenzene, vinyl acrylate and vinyl methacrylate, and allyl compounds such as allyl acrylate, allyl methacrylate, diallyl maleate, diallyl fumarate, diallyl itaconate, monoallyl maleate, monoallyl fumarate, triallyl cyanurate, which may be used either alone or in combination. The AEM and the ACM may be crosslinked by reaction employing a small amount of a vulcanizing agent in melt blending, so that heat resistance and oil resistance can be improved with flexibility maintained.

The styrene-isobutylene block copolymer as a soft ingredient for the blend polymer is not particularly limited as long as polystyrene (PS) is employed as a hard segment and polyisobutylene (PIB) is employed as a soft segment. Examples thereof include styrene-isobutylene diblock copolymer (SIB) and styrene-isobutylene-styrene triblock copolymer (SIBS), among which SIBS is preferably used in terms of excellent strength. Commercially available examples of SIBS include SIBSTAR available from Kaneka Corporation.

In the case where the styrene-isobutylene block copolymer is used, a compatibilizer is preferably mixed in addition thereto, because advantageous effects that the dispersibility of the styrene-isobutylene block copolymer to the PBT as a base is improved and also the elongation of the resulting hose is improved can be obtained.

Examples of the compatibilizer include an ethylene-glycidyl methacrylate (EGMA), a modified EGMA, an ethylene-glycidylmethacrylate-vinyl acetate ternary copolymer, an ethylene-glycidyl methacrylate-methyl acrylate ternary copolymer, an ethylene-methyl acrylate copolymer, an ethylene-methyl acrylate-acrylic acid ternary copolymer, an ethylene-ethyl acrylate copolymer (EEA), a modified EEA, a modified ethylene-ethyl acrylate-maleic anhydride copolymer, an ethylene-methacrylate copolymer, an acrylic elastomer (ACM), an ethylene-vinyl acetate copolymer (EVAc), a modified EVAc, a modified polypropylene (PP), a modified polyethylene (PE), an ethylene-acrylate-maleic anhydride ternary copolymer, an epoxidized styrene-butadiene-styrene block copolymer (an epoxidized SBS), an epoxidized styrene-ethylene butene-styrene block copolymer (an epoxidized SEBS), an acid-modified SBS, an acid-modified SEBS, a styrene-isopropenyl oxazoline copolymer, a glycidyl methacrylate-methyl methacrylate copolymer, a glycidyl methacrylate-styrene copolymer, a thermoplastic urethane and the like. These may be used alone or in combination of two or more.

Examples of the modified EGMA include one obtained by grafting polystyrene (PS), polymethyl methacrylate (PMMA) an acrylonitrile-styrene copolymer (AS), a copolymer of PMMA and butyl acrylate or the like to EGMA and the like.

Examples of the modified EEA include one obtained by grafting PS, PMMA, AS, a copolymer of PMMA and butyl acrylate or the like to EEA, a maleic anhydride-modified EEA, a silane-modified EEA and the like.

Examples of the modified ethylene-ethyl acrylate-maleic anhydride copolymer include one obtained by grafting PS, PMMA, AS, a copolymer of PMMA and butyl acrylate or the like to an ethylene-ethyl acrylate-maleic anhydride copolymer and the like.

Examples of the modified EVAc include one obtained by grafting PS, PMMA, AS, a copolymer of PMMA and butyl acrylate or the like to EVAc and the like.

Examples of the modified PP include one obtained by grafting PS or AS to PP, a maleic anhydride-modified PP, a hydroxyl group-modified PP and the like.

Examples of the modified PE include one obtained by grafting PS, PMMA, AS, a copolymer of PMMA and butyl acrylate or the like to a low-density polyethylene (LDPE), amaleicanhydride-modifiedPE, ahydroxylgroup-modified PP and the like.

It is necessary that the blend polymer for forming the outer layer 3 has flexural modulus of 350 to 650 MPa, preferably 400 to 500 MPa. When the flexural modulus is within this range, a balance among a low temperature property, hydrolysis resistance and the like becomes excellent, so that performances required for the hose of the present invention can be exerted. The mixing ratio of each soft ingredient as mentioned above for enabling the flexural modulus to fall within this range is as follows. When polymers each having a core-shell structure are employed as a soft ingredient, the soft ingredient is preferably 70 to 120 parts by weight (hereinafter, just abbreviated to "parts") based on 100 parts of PBT. When the ACM is employed as a soft ingredient, the soft ingredient is preferably 30 to 100 parts based on 100 parts of PBT. When the styrene-isobutylene block copolymer is employed as a soft ingredient, the soft ingredient is preferably 50 to 400 parts and the compatibilizer is 5 to 20 parts based on 100 parts of PBT.

Like the inner layer 1 and the fuel-permeation-resistant layer 2, the outer layer 3 may also be imparted with electrical conductivity by blending an electrically conductive material such as carbon black, carbon nanotube and metal powder in the material for forming the outer layer.

The fuel hose of the present invention is produced, for example, in the following manner. The materials for forming the inner layer 1, the fuel-permeation resistant layer 2 and the outer layer 3 are each kneaded for preparation of each composition. Then, these compositions are each co-extruded by means of an extruder, and the resulting inner, fuel-permeation-resistant and outer layers are sized by way of vacuum sizing and cooled to solidification in a cooling water bath. Thus, the intended fuel hose (see the Figure) is produced. The fuel hose of the present invention may have a four-layer structure by extruding the same material as for forming the inner layer 1 (an alloy of an elastomer and a polyester resin or thermoplastic polyester elastomer, which may be the same or different with the material for forming the inner layer 1) between the material for forming the fuel-permeation-resistant layer 2 and the material for forming the outer layer 3 by means of an extruder (four-layer simultaneous extrusion), as required, so as to have a four-layer hose. The thus obtained (three-layer or four-layer) fuel hose of the present invention may at least partly have a bellows structure, which is created, for example, by a corrugator.

In the aforesaid production process, each layer is formed by the co-extrusion method. However, the method for the formation of each layer is not limited to the co-extrusion method. For example, the inner layer 1 may first be formed on a mandrel by extrusion, and then the fuel-permeation-resistant and outer layers 2, 3 may sequentially be formed on the outer peripheral surface of the inner layer 1 by extrusion.

The inner layer 1 of the thus obtained fuel hose typically has a thickness of 0.01 to 0.5 mm, preferably 0.1 to 0.4 mm. The fuel-permeation-resistant layer 2 typically has a thickness of 0.01 to 0.5 mm, preferably 0. 05 to 0. 4 mm. The outer layer 3 typically has a thickness of 0.1 to 3 mm, preferably 0.3 to 1 mm. The additional layer provided, as required, between the fuel-permeation-resistant layer 2 and the outer layer 3 typically has a thickness of 0.01 to 0.5 mm, preferably 0.1 to 0.4 mm. The fuel hose of the present invention typically has an inner diameter of 3 to 60 mm, preferably 4 to 40 mm.

In the fuel hose of the present invention, the flexural modulus of the inner layer 1 is preferably in the range of 400 to 2000 MPa, particularly preferably in the range of 450 to 1500 MPa. The flexural modulus of the fuel-permeation-resistant layer 2 is preferably in the range of 1400 to 2400 MPa, particularly preferably in the range of 1400 to 2100 MPa. The flexural modulus of the outer layer 3 is preferably in the range of 350 to 650 MPa, particularly preferably in the range of 400 to 500 MPa. Incidentally, the flexural modulus is expressed as a value measured in accordance with ISO 178.

The fuel hose of the present invention is not limited to the three-layer structure, as shown in the Figure. The fuel hose of the present invention may have a four-layer structure provided with the additional layer formed by the same material as the inner layer 1 (an alloy of an elastomer and a polyester resin or thermoplastic polyester elastomer, which may be the same or different with the material for forming the inner layer 1) between the fuel-permeation-resistant layer 2 and the outer layer 3. With such a structure, the strength of the laminated product is increased. When the resulting hose has a large diameter, pressure resistance is further improved and is more excellent. A wire-mesh layer or a reinforcing fiber layer may be provided, as required, on an outer peripheral surface of the fuel hose of the present invention.

When a fuel hose has a two-layer structure by deleting the permeation-resistant layer 2 from the three-layer structure as shown in the Figure, the resulting hose is slightly inferior in less permeability as compared with the three-layered hose, but is more flexible than the three-layered hose. In the case where barrier performance is not so much required but performance like built-in flexibility is more important, the hose having the two-layer structure is more advantageous. As same as in the three-layered hose shown in the Figure, the two-layer hose can be produced and interface of this hose can be bonded without use of adhesive, and the resulting polyester hose is excellent in hydrolysis resistance and is suitable for practical use.

A wire-mesh layer or a reinforcing layer may be provided, as required, on an outer peripheral surface of the two-layer fuel hose of the present invention.

Next, an explanation will be given to Examples of the present invention and Comparative Examples. It should be understood that the invention be not limited to these examples.

Prior to the explanation of Examples and Comparative Examples, materials herein employed will be explained.

### Modified polyolefin alloy PBT

GRILPET B24HNZ available from EMS-CHEMIE AG (Flexural modulus: 1490 MPa)

### Thermoplastic PBN elastomer

PELPRENE EN5030 available from Toyobo Co., Ltd. (Flexural modulus: 480 MPa)

### PBT resin

DURANEX 700FP available from Polyplastics Co. , Ltd. (Flexural modulus: 2030 MPa)

### PBN resin

TQB-OT available from Teijin Chemicals, Ltd. (Flexural modulus: 1900 MPa)

### Carbon black

ASAHI THERMAL available from Asahi Carbon Co., Ltd.

### Core-shell particles (i)

IM-203 available from Ganz Chemical Co., Ltd.

### Core-shell particles (ii)

IM-301 available from Ganz Chemical Co., Ltd.

### AEM polymer

VAMAC G available from E.I.DuPont de Nemours & Company

### Vulcanizing agent

DIAC #1 available from E.I.DuPont de Nemours & Company

### Styrene-isobutylene-styrene triblock copolymer (SIBS)

SIBSTAR 103T-U available from Kaneka Corporation

### Compatibilizer

Epoxidized SBS (EPOFREIEND AT501 available from Daicel Chemical Co., Ltd.)

### Examples 1 to 9 and Comparative Examples 1 to 3

First, each material as shown in Table 1 was prepared. Each outer layer material a, b, d, e and g was blended as shown in Table 1, and the resulting mixture was mixed and stirred, and then kneaded by means of a twin screw extruder so as to be pelletized. Each outer layer material c and f was mixed with AEM polymer, a vulcanizing agent and carbon black by means of a kneader, and then formed into a ribbon-like shape by a roll. Further, the thus obtained ribbon-shaped mixture was melt-blended with the PBT resin by a side feeder as incidental facilities of the twin screw extruder so as to be pelletized. Thus prepared materials were injection-molded and each flexural modulus (MPa) thereof was measured in accordance with ISO 178. Further, thus prepared materials were each extruded into sheets, respectively, and then cooled to solidification. Physical properties (elongation and permeability constant) of the thus obtained sheets (thickness: 0.3 mm) are also shown in the same table. The elongation (%) was measured in accordance with ASTMD 638. The permeability constant [(mg · mm) / (cm² · day)] was measured at 80°C by means of a cup test jig. First, the cup test jig (inner diameter: 66 mm, inner volume: 135 cm³, permeation dimensions: 34.2 cm²) was prepared. The cup test jig was filled with pure water (100 cm³), and was covered with the sample sheet via butyl rubber packing, and then was turned upside down, so that the sample sheet was in contact with pure water. Then, it was allowed to stand at 80°C. Decreasing amount of pure water and time for letting to stand were plotted in a graph. The permeability constant [(mg · mm) / (cm² · day)] was calculated by inclination of the curve.

**TABLE 1**

| (parts) | | | | | | | |
|---|---|---|---|---|---|---|---|
| | outer layer material | | | | | | |
| | a | b | c | d | e | f | g |
| PBT resin | 100 | 100 | 100 | 100 | 100 | 100 | 100 |
| Carbon black | 1 | 1 | 1 | 1 | 1 | 1 | 1 |

| Soft ingredients | | | | | | | |
|---|---|---|---|---|---|---|---|
| Core-shell particles (i) | 70 | - | - | - | 50 | - | - |
| Core-shell particles (ii) | - | 120 | - | - | - | - | - |
| AEM polymer | - | - | 60 | - | - | 110 | - |
| Vulcanizing agent | - | - | 0.3 | - | - | 0.5 | - |
| SIBS | - | - | - | 400 | - | - | 500 |
| Compatibilizer | - | - | - | 20 | - | - | 20 |
| Flexural modulus (Mpa) | 650 | 350 | 400 | 350 | 800 | 200 | 250 |
| Elongation (%) | 300 | 270 | 260 | 350 | 280 | 100 | 300 |
| Permeability constant (mg·mm) / (cm²·day) | 2 | 2.5 | 2.3 | 1.5 | 2 | 25 | 2 |

Next, each material for forming an inner layer or a fuel-permeation-resistant layer as shown in Tables 2 and 3 was prepared in addition to the above-mentioned outer layer materials a to g. Then, an inner layer material, a fuel-permeation-resistant layer material and an outer layer material were each simultaneously extruded by means of an extruder, and then cooled to solidification in a cooling water bath, so that fuel hoses (inner diameter: 6 mm) of Examples and Comparative Examples each having an inner layer (thickness: 0.3 mm), a fuel-permeation-resistant layer (thickness: 0.2 mm) formed on an outer peripheral surface of the inner layer and an outer layer (thickness: 0.5 mm) on outer peripheral surface of the fuel-permeation-resistant layer. In Example 6, a fuel-permeation-resistant layer was not formed. In Example 8, a hose was produced in the same manner as in Example 1, except that a dry blend of 50 wt% of PBT pellets and 50 wt% of PBN pellets was used for forming a fuel-permeation-resistant layer. In Example 9, a hose having a four-layer structure was produced by forming a modified polyolefin alloy PBT layer between a fuel-permeation-resistant layer and an outer layer. In detail, each material was simultaneously extruded by means of a four-layer extruder, and then cooled to solidification in a cooling water bath, so that fuel hoses (inner diameter: 6 mm) having an inner layer (thickness: 0.3 mm), a fuel-permeation-resistant layer (thickness: 0. 1 mm) formed on an outer peripheral surface of the inner layer, modified polyolefin alloy PBT (GRILPET B24HNZ available from EMS-CHEMIE AG) layer (thickness: 0.2 mm) on an outer peripheral surface of the fuel-permeation-resistant layer and an outer layer (thickness: 0.4mm) on outer peripheral surface thereof was produced in Exmple 9.

The fuel hoses of Examples and Comparative Examples thus produced were evaluated for characteristic properties thereof in the following manner. The results are shown in Tables 2 to 3.

### Hydrolysis resistance

After a fuel hose was allowed to stand at a temperature of 80° C at a humidity of 95% for 3000 hours, the hose was cooled to -40°C and bent by 180 degrees for visual observation of abnormality such as fold-down as the evaluation of the hydrolysis resistance. In Tables 2 to 3, the symbol × indicates that the fuel hose suffered from abnormalities such as fold-down, and the symbol O indicates that the hose did not suffer from any abnormalities.

### Low-temperature flexibility

After a fuel hose was refrigerated at -40°C for four hours, the fuel hose was bent by 180 degrees for the evaluation of the low-temperature flexibility. In Tables 2 to 3, the symbol X indicates that the fuel hose suffered from abnormalities such as cracks on the interior surface or exterior surface of the hose, and the symbol ○ indicates that the hose did not suffer from any abnormalities.

**TABLE 2**

| | EXAMPLE | | | | | | |
|---|---|---|---|---|---|---|---|
| | 1 | 2 | 3 | 4 | 5 | 6 | 7 |
| Inner layer material | Modified polyolefin alloy PBT | Modified polyolefin alloy PBT | Modified polyolefin alloy PBT | Modified polyolefin alloy PBT | Modified polyolefin alloy PBT | Modified polyolefin alloy PBT | Thermoplastic PBN elastomer |
| Fuel-permeation-resistant layer material | PBT resin | PBT resin | PBT resin | PBT resin | PBN resin | - | PBN resin |
| Outer layer material | a | b | c | d | b | b | a |
| Hydrolysis resistance | O | O | O | O | O | O | O |
| Low temperature property | O | O | O | O | O | O | O |

**TABLE 3**

| | EXAMPLE | | COMPARATIVE EXAMPLE | | |
|---|---|---|---|---|---|
| | 8 | 9 | 1 | 2 | 3 |
| Inner layer material | Modified polyolefin alloy PBT | Modified polyolefin alloy PBT | Modified polyolefin alloy PBT | Modified polyolefin alloy PBT | Modified polyolefin alloy PBT |
| Fuel-permeation-resistant layer material | PBT/PBN blend | PBT resin | PBT resin | PBT resin | PBT resin |
| Outer layer material | a | a | e | f | g |
| Hydrolysis resistance | O | O | O | × | × |
| Low temperature property | O | O | × | O | × |

| | | | | | |
|---|---|---|---|---|---|
| *The hose of Example 9 only had a four-layer structure by forming a modified polyolefin alloy PBT layer between a fuel-permeation-resistant layer and an outer layer. | | | | | |

As can be understood from the results shown in the Tables, since the fuel hoses of the Examples each employed the blend polymer having flexural modulus within a specified range (350 to 650MPa) obtained by blending soft ingredients such as polymer particles each having a core-shell structure, ethylene acrylic elastomer (AEM) and a styrene-isobutylene block copolymer into polybutylene terephthalate (PBT) for the outer layer, the fuel hoses of the Examples were less permeable to gasoline, and were excellent in low-temperature flexibility and hydrolysis resistance.

On the other hand, the outer layer of each fuel hose of Comparative Examples 1 to 3 was formed by the same material as the above-mentioned blend polymer, which, however, did not satisfy requirements of the flexural modulus according to the present invention, it was found the fuel hose was inferior in the balance among fuel-permeation-resistance, low-temperature flexibility and hydrolysis resistance, and thus desired hose performances could not be exerted. It is thought that the outer layer had poor adhesion with the PBT resin and thus reinforcing effect could not be obtained, so that low temperature flexibility was inferior in the hose of the Comparative Example 3.

The fuel hose of the present invention is preferably used as an automotive fuel hose, however, it may be also used a as fuel hose for a tractor, a cultivator and the like.

## Claims

1. A fuel hose comprising an inner layer which contacts a fuel being transported, a fuel-permeation-resistant layer provided on an outer peripheral surface of the inner layer and an outer layer provided on an outer peripheral surface of the fuel-permeation-resistant layer, the inner layer being formed by the following (A), the fuel-permeation-resistant layer being formed by the following (B), and the outer layer being formed by the following (C):
(A) a polyester resin softened by an alloy of elastomer components or copolymerization;
(B) at least one polyester resin of polybutylene naphthalate (PBN) and polybutylene terephthalate (PBT);
(C) a polymer having flexural modulus of 350 to 650MPa obtained by blending at least one selected from the group consisting of polymer particles each having a core-shell structure, ethylene acrylic elastomer (AEM) and a styrene-isobutylene block copolymer into polybutylene terephthalate (PBT).

2. A fuel hose as set forth in claim 1, further comprising a layer formed by using the above-mentioned (A) provided between the fuel-permeation-resistant layer and the outer layer.

3. A fuel hose comprising an inner layer which contacts a fuel being transported and an outer layer provided on an outer peripheral surface of the inner layer, the inner layer being formed by the following (A) and the outer layer being formed by the following (C):
(A) a polyester resin softened by an alloy of elastomer components or copolymerization;
(C) a polymer having flexural modulus of 350 to 650MPa obtained by blending at least one selected from the group consisting of polymer particles each having a core-shell structure, ethylene acrylic elastomer (AEM) and a styrene-isobutylene block copolymer into polybutylene terephthalate (PBT).

4. A fuel hose as set forth in any of claims 1 to 3, wherein the polymer particles each having a core-shell structure of the above-mentioned (C) have a structure that a core comprising acrylic elastomer (ACM) is covered with a shell layer comprising acrylic resin having a polar functional group.
